(19) 

Europäisches
Patentamt
European
Patent Office
Office européen
des brevets

(11) **EP 3 797 280 B1**

(12) **EUROPEAN PATENT SPECIFICATION**

(45) Date of publication and mention
of the grant of the patent:
**06.12.2023  Bulletin 2023/49**

(21) Application number: **18749570.0**

(22) Date of filing: **22.05.2018**

(51) International Patent Classification (IPC):
***G01N 15/02*** *(2006.01)*

(52) Cooperative Patent Classification (CPC):
**G01N 15/02**

(86) International application number:
**PCT/IT2018/000076**

(87) International publication number:
**WO 2019/224845 (28.11.2019 Gazette 2019/48)**

(54) **APPARATUS AND METHOD FOR THE CHARACTERIZATION OF OBJECTS BY ANALYSIS OF SCATTERED RADIATION**

VORRICHTUNG ZUR CHARAKTERISIERUNG VON OBJEKTEN DURCH ANALYSE VON STREUSTRAHLUNG

APPAREIL POUR LA CARACTÉRISATION D'OBJETS PAR ANALYSE DE RAYONNEMENT DIFFUSÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.03.2021  Bulletin 2021/13**

(73) Proprietor: **EOS S.r.l.**
**20139 Milano (IT)**

(72) Inventor: **POTENZA, Marco Alberto Carlo**
**20135 Milano (IT)**

(74) Representative: **Vanzini, Christian et al**
**Jacobacci & Partners S.p.A.**
**Corso Emilia 8**
**10152 Torino (IT)**

(56) References cited:
**EP-A1- 1 899 705     US-A- 6 049 382**
**US-B2- 6 597 446**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates in general to methods for the optical characterization of particle objects.

Various optical instruments for the characterization of individual objects suspended in a fluid are based on the phenomenon of scattered radiation for the determination of their characteristics, including size. Examples are single particle sizers such as the Optical Particle Counter, Single Particle Obscuration Sensor, Single Particle Extinction and Scattering, flow cytometry instruments with all the variants.

Various solutions are based on the measurement of the scattered radiation in a given solid angle, the measurement of the forward scattered radiation within a suitable solid angle, the measurement of the radiation removed from the transmitted beam, and the measurement of the interference between the scattered and the transmitted beam [1, 2, 3, 4, 5, 6, 7, 8, 9]. In all these instruments, the scattered radiation is collected by a sensor, directly or through appropriate devices, often optical devices such as lenses and/or mirrors. In some cases, such as in flow cytometry, the transmitted radiation is stopped by an appropriate obstruction in order to access only the scattered radiation.

Measurement-based instruments related to the radiation scattering by single particles are generally divided into two categories: 1) volumetric, wherein the radiation beam impinges the whole cross-section of the adduction channel with a substantially uniform intensity; 2) non-volumetric, wherein the radiation beam impinges only a fraction of the cross-section of the channel [10]. The main characteristics and limitations of the instruments of the two categories are described below.

In volumetric instruments (category 1), the following are guaranteed: a) measurement of all the suspended material that passes through the adduction channel, allowing a very reliable measurement of the concentration and the determination of rare events; b) illumination of the entire cross-section of the adduction channel with a substantially homogeneous radiation intensity, guaranteeing good reliability in determining the measured parameters. A limitation is represented by the sensitivity to small sizes due to i) the greater extension of the region impinged by the radiation and/or ii) the presence of parasitic scattered radiation, also called stray light in the optical case, which limits the minimum measurable level of the signals generated by the transit of the particles in the beam.

In non-volumetric instruments (category 2) the measurement of particles much smaller than in the previous case is guaranteed by exceeding the two limits i) and ii). The main limitations are represented by iii) a purely statistical measurement of the concentration from only the fraction of fluid measured, iv) uncertainty on the intensity of radiation that impinges the particle due to the non-homogeneity of the beam and the resulting intensity that strikes the particle depending on the transit position in the beam. In conventional instruments, to overcome difficulty iii), appropriate statistical procedures may be used; to overcome difficulty iv), there are several solutions that make use of deconvolution procedures or suitably structured beams and corresponding data analysis techniques. A recent solution [8, 9] exploits the interference between the transmitted beam and the scattered beam, introducing a criterion and a validation parameter allowing the transit position of the particle in the beam to be detected. Such a solution is disclosed in EP 1899705 A1, which discloses an apparatus according to the preamble of claim 1 and a method according to the preamble of claim 6. US 6597446 B2 discloses a holographic scatterometer for detection and analysis of wafer surface deposits. US 6049382 A discloses an apparatus and procedure for characterization of sprays composed by spherical particles.

An object of the present invention is to provide a solution for increasing the sensitivity to smaller particles.

In view of this purpose, the object of the invention is an apparatus for characterizing particle objects by means of a radiation beam which propagates along an optical axis, having the features of claim 1. Such an apparatus comprises

one or more observation regions suitable to be illuminated by the radiation beam and suitable to be transited by at least one particle object, said observation region being arranged near or at a focus of the radiation beam, wherein a fraction of the radiation beam - hereinafter, scattered fraction - is scattered following interaction with the particle object transiting in the observation region, and another fraction of the radiation beam - hereinafter, transmitted fraction - is transmitted along the respective optical axis through the respective observation region, without interacting with the particle object transiting in the respective observation region,

at least one first sensor suitable for detecting an interference image determined by the interference between the transmitted fraction and at least a part of the scattered fraction that is propagated around the direction of the optical axis of the radiation beam; and at least one processing unit configured to determine a characteristic of said particle object from said interference image;

said apparatus being characterized in that it comprises optical means acting on at least one of said radiation beam, scattered fraction and transmitted fraction, such that the transmitted fraction and the scattered fraction of the radiation beam are distributed in a spatially differentiated manner in a space interposed between the observation region and the sensor, wherein an attenuator is provided arranged in a region of said space occupied mainly by the transmitted beam, the attenuator being configured to attenuate the transmitted fraction of the radiation beam without substantially altering the scattered fraction of the radiation beam.

A further object of the invention is a method for characterizing particle objects, having the features of claim 6. Such a method comprises the following steps:

generating a radiation beam that propagates along an optical axis;

illuminating with said radiation beam an observation region that is suitable to be transited by at least one particle object, said observation region being arranged at a focus of the radiation beam, wherein a fraction of the radiation beam - hereinafter, scattered fraction - is scattered following interaction with the particle object transiting in the observation region, and another fraction of the radiation beam - hereinafter, transmitted fraction - is transmitted through the observation region, without interacting with the particle object transiting in the observation region;

collecting, by at least one sensor at the optical axis of the radiation beam, an interference image or multiple interference images in time sequence, determined by the interference between the transmitted fraction and at least a part of the scattered fraction which propagates around the direction of the optical axis; and

determining a characteristic of the particle object starting from said interference image or from said sequence of images;

said method being characterized in that at least one of said radiation beam, scattered fraction and transmitted fraction is formed in such a way that the transmitted fraction and the scattered fraction of the radiation beam are distributed in a spatially differentiated manner in a space interposed between the observation region and the sensor, wherein an attenuator is provided arranged in a region of said space occupied mainly by the transmitted beam, the attenuator being configured to attenuate the transmitted fraction of the radiation beam without substantially altering the scattered fraction of the radiation beam.

The principle on which the present invention is based is described below. Consider a radiation beam F which strikes a particle placed at a point P. The interaction between the radiation beam and the particle generates a scattered wave according to the known principles of light scattering [11, 12, 13, 14]. Such wave carries information related to the characteristics of the particle. From the transmitted beam, measured downstream of the particle, is therefore subtracted a power corresponding to the product between the intensity of the beam striking the particle and a parameter, generally called the extinction cross-section, of the same particle, satisfying the Energy Conservation Principle. It is known that the subtraction of power from the transmitted beam may also be explained as an interference effect between the undisturbed beam and the forward scattered wave (Optical Theorem) [9, 11, 12, 13, 14, 15, 16]. Although this interpretation is not essential for the description of power removal, it acquires importance in the case of the present invention because it shows how it is possible to vary at will the effects generated by the interference between the scattered wave and the transmitted wave by modifying the relative amplitude of the two waves and therefore also all the effects deriving from the interference that lie outside only the attenuation of the transmitted beam. To clarify this aspect, consider the incident field on the particle $E_0$ and the scattered field $E_S$. In analogy to what is well known in the literature, the transmitted field may be represented as a superposition of the scattered field and the incident field:

$$\mathbf{E}_T = \mathbf{E}_0 + \mathbf{E}_S$$

Considering that in general the inequality $|\mathbf{E}_0| >> |\mathbf{E}_S|$ applies, and therefore the quadratic term may be omitted in $|\mathbf{E}_S|$, one obtains that the intensity is:

$$I_T = |\mathbf{E}_0 + \mathbf{E}_S|^2 = |\mathbf{E}_0|^2 + 2\ \mathbf{E}_0 \cdot \mathbf{E}_S$$

The last term represents the interference between the two fields. It is a term that takes power away from the transmitted field in accordance with the Energy Conservation Principle and the Optical Theorem.

As the position of the particle in the beam changes, the amplitude of the scattered wave and its phase varies, causing local intensity variations downstream of the point of interaction, due to interference with the transmitted field [9]. The ratio between the second term evaluated in the presence of the particle and the first term evaluated in the absence of the particle provides the relative variation of the transmitted field, which is used for the measurement of parameters of the particle as occurs in different instruments based on existing techniques [3, 4, 8, 9, 17]. Since in the absence of the particle the undisturbed field is equal to $E_0$, the ratio just introduced is equal to

$$R = 2\ \mathbf{E}_0 \cdot \mathbf{E}_S\ /\ |\mathbf{E}_0|^2 \propto 2\ |\mathbf{E}_S|\ /\ |\mathbf{E}_0|$$

Such ratio describes the relative amplitude of the fields which are found to interfere on a plane placed sufficiently far from the interaction zone to appear in the far field of the transmitted beam and makes it possible to clarify the method object of the present invention. By appropriately reducing the amplitude of the field $E_0$ and leaving $E_S$ unchanged, a resulting increase of the ratio R is obtained. More precisely, supposing to attenuate the field $E_0$ by a factor A, and therefore its intensity by a factor $A^2$, the ratio R will increase by a factor equal to A.

This allows one to carry out, for example, measurements of the intensity distributions that are formed by interference on the transmitted beam with a sensitivity at times higher than the traditional case with methods used to measure the reduction of the transmitted power [3, 4, 8, 9]. Moreover, the sensitivity in the measurement of all the interference effects forming within the transmitted beam will also be improved, as happens for example in the technique referred to in the patent [8] and in the works published in the literature [9, 17].

If, on the other hand, one wants to measure the power of the scattered radiation in directions that are outside of the transmitted beam, such measurement is not influenced by the attenuation of the beam, which is introduced after the interaction of the radiation beam with the object under examination.

The present invention may be applied to a volumetric method or alternatively to a non-volumetric method according to the previously introduced classification. In the case of the embodiment applied to the volumetric method, all the advantages a) and b) of the volumetric methods are obtained. The invention also allows the limitation typical of the volumetric sensors indicated above at i), to be overcome due to the increase in sensitivity to small diameters introduced by the attenuation A of only the transmitted component. It should be noted that by attenuating the beam transmitted after the interaction region, the parasitic radiation remains unchanged, and therefore the magnitude of the disturbance thereby introduced in the system increases in proportion to the attenuation of the transmitted beam. This aspect tends to make the limitation ii) much more significant with respect to traditional volumetric sensors, but it may be easily resolved according to the already widely used schemes, based on the fact that the parasitic light is substantially constant over time and may be appropriately accounted for by an appropriate analysis of the variation of the signal recorded as a function of the time [9].

In the case of the embodiment applied to the non-volumetric method, however, the object is to increase the sensitivity to small diameters due to the effect introduced by the attenuator as described above. In this case, therefore, the method may be used to make one of the techniques based on measurement of the extinction [3, 4] or the interference between the transmitted and scattered beam [8, 9] more sensitive.

Further features and advantages of the apparatus and the method according to the invention will become more apparent in the following detailed description, made with reference to the accompanying drawings, provided purely to be illustrative and non-limiting, wherein:

- Figure 1 is a schematic representation of a first embodiment of the present invention;
- Figures 2a and 2b are schematic representations of two possible lens systems which allow the embodiment of Figure 1 to be achieved;
- Figures 3a and 3b are images of interference figures obtainable with the embodiment of Figure 1, respectively in the case of a particle on the optical axis and in the case of a particle outside the optical axis;
- Figures 4a and 4b are graphs which represent an example of the attenuation of the beam (a) and of the difference between the power of the beam above and below the optical axis, represented as a function of the time of transit through the beam;
- Figure 5 is a schematic representation of a second embodiment of the present invention; and
- Figure 6 shows graphs of examples of time-dependent parameters obtained from signals recorded by a sensor in a system according to the embodiment of Figure 1.

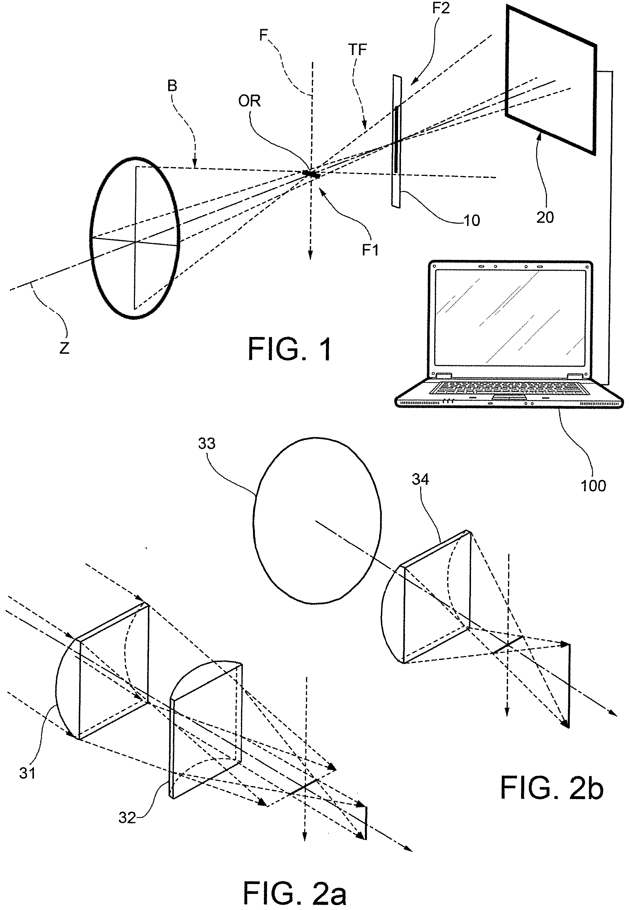

The following describes a possible embodiment of the method, given by way of example and for non-exhaustive purposes, with reference to Figure 1. Such embodiment may be used in the case wherein the radiation beam impinges the entire cross-section of the adduction conduit (volumetric method) as well as in the case wherein the beam size is smaller than the size of the conduit (non-volumetric).

Consider a beam of radiation B appropriately endowed with astigmatism, oriented in such a way that the focus F1, also known as the focal line in the terminology of astigmatic beams, generated by rays inclined along vertical planes (called meridionals) preceding at an appropriate distance the focal line F2 generated by the rays inclined in the horizontal plane (called sagittals). We will call the two focusing regions respectively meridional focal line and sagittal focal line. A flow of fluid containing particles to be investigated is guided in a manner known per se via the meridional focal line F1, as indicated by the arrow F. At this meridional focal line F1 there is therefore defined an observation region OR, e.g. a flow cell, at which the particles in transit are impinged by the incident beam B. The particles passing through the meridional focal line F1 thus generate scattered radiation (not shown). Downstream of the meridional focal line F1, the transmitted fraction TF of the beam diverges vertically and at the same time converges horizontally, reaching the sagittal focal line F2. The scattered wave, on the other hand, being substantially spherical, is emitted by the particle diverging in all directions permitted by the scattering.

An attenuator 10 is placed at the sagittal focal line, composed, for example, of a thin, vertical strip which acts almost exclusively on the transmitted field component TF. The scattered field, on the other hand, reaches the same distance having expanded in both directions due to its own divergence, and therefore remains little altered by the attenuator 10. Downstream of the sagittal focal line F2, the transmitted beam TF also diverges in the horizontal direction and the two scattered and transmitted waves propagate to the measurement region, where they are superposed, generating the phenomenon of interference. In such region, which may be described for simplicity with a planar region placed perpendicular to the symmetry axis of the system (optical axis z), an interference fringe system is formed which is detectable by an optical sensor 20. Such fringes, their shape and their distribution, may be easily described quantitatively on the basis of equations well known to those skilled in the art. Detailed analysis of the properties of the interference fringes shows in a very general way that, appropriately accounting for the attenuation introduced, the phenomena of removing power from the transmitted beam in the presence of a particle, as well as the time-dependent phenomena observed during the transit of the particle through the meridional focal line F1 by measuring the power on a multiplicity of appropriate regions located in the observation region OR, are substantially unchanged compared to the case wherein the beam is focused without any astigmatism, and therefore the phenomenon of interference between the scattered wave and the transmitted wave is measured without any attenuation, as occurs in some existing techniques [3, 4, 8, 9].

In particular, it may be demonstrated that the removal of power provides the correct extinction cross section, linked, as is well known, to the real part of the complex amplitude of the scattered field, as well as that the difference between the power measured above the optical axis and under the optical axis provides a quantity linked to the imaginary part of the same amplitude. It is therefore seen that, by operating with the scheme of the present invention, the main results of the SPOS and SPES techniques [3, 4, 8, 9] are reproduced, while providing a different optical scheme which guarantees an improvement in sensitivity to the smallest particles.

With respect to the non-astigmatic case, however, the ability to characterize the transit position of the particle with respect to the optical axis is worse. This aspect does not have great relevance in the volumetric case, which completely avoids the problem by taking advantage of what is described in point b) above, while it should be considered when the present invention is used in the non-volumetric case. Measures similar to those commonly used to determine the transit position of the particle, or statistically reconstructing a distribution of values of the quantities measured on the basis of the knowledge of the effects due to non-homogeneity of the beam may also be applied in this case.

In Figure 1, a processing unit configured to receive the signal provided by the sensor 20 and to determine at least one characteristic of the particle(s) from the interference image is collectively indicated at 100. This characteristic may be, for example, size, composition, shape, aggregation state, interaction between particles, interaction between particles and the surrounding medium.

Any optical system may be used to create the astigmatic beam, including, purely by way of example: at least two cylindrical or acylindrical lenses with axes perpendicular to each other, at least one spherical doublet or at least one aspherical lens to eliminate spherical aberration, plus at least one cylindrical or acylindrical lens, at least one spherical-cylindrical lens, at least one toric lens. Also part of the present invention is the case wherein the walls of the flow cell are shaped in such a way as to impart the optical powers necessary for the incoming radiation. Figures 2a and 2b show two schematic examples which represent the two perpendicular focal lines F1 and F2, the direction of the sample adduction flow and the lenses necessary to obtain the described geometry. In a), two cylindrical lenses 31 and 32 are used with axes perpendicular to each other. In b), a spherical lens 33 and a cylindrical lens 34 are used.

Any embodiment wherein the axes of the cylinders, and hence the two focal lines, are generally skewed, is part of the present invention.

The use of appropriate optical systems to reduce the astigmatism of the beam downstream of the sagittal focal line F2 may be advantageous to facilitate light collection on the sensor device 20.

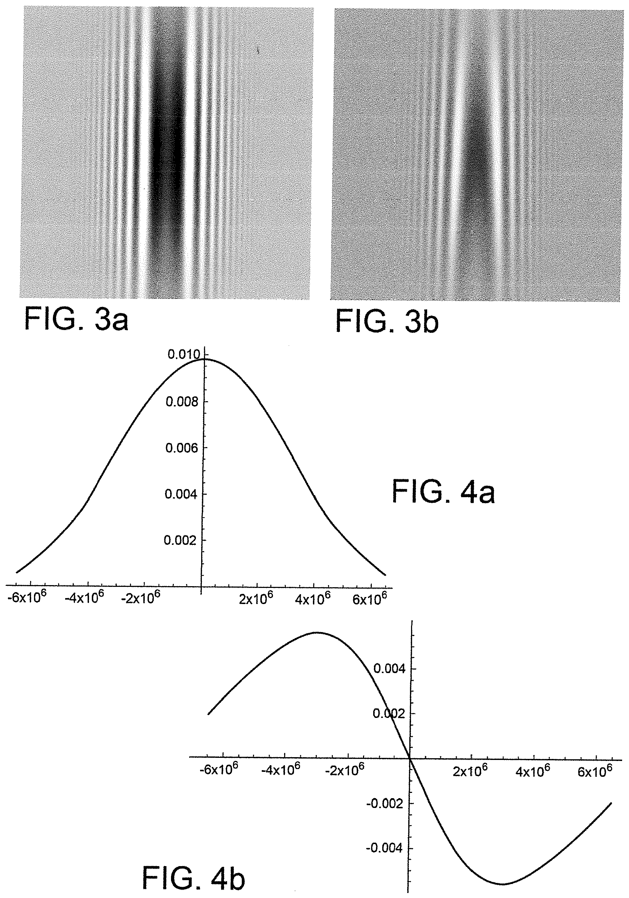

Figures 3a and 3b show an example of the interference figure which exemplifies the situation described above. The figure shows only the interferential term $2\,\mathbf{E}_0\,\mathbf{E}_S$, to which in the actual case one must add the intensity profile of the transmitted beam. The optical axis of the system passes through the center of the figure. Two cases are represented: in a), the particle is placed exactly on the optical axis of the system, in b), it is placed slightly above, at a distance that maximizes the difference d between the power measured in the upper half-plane and the power measured in the lower half-plane. Figure 4b shows the values of the difference d as a function of time during the transit of the particle. The values of the complex amplitude of the scattered field obtained from the numerical model compared with the values expected for the particles considered are in good agreement, showing the reliability of the method.

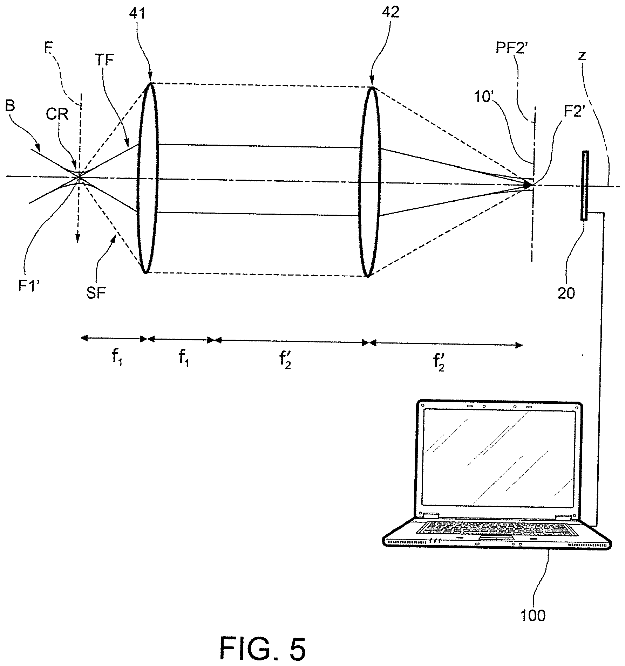

The following describes another possible embodiment of the method, also given by way of example and not for exhaustive purposes, with reference to Figure 5. Such embodiment is by its nature more suitable for application to the non-volumetric case but guarantees the same potential for identifying the transit positions of the objects through the beam that is used and described in [8, 9].

Consider a radiation beam focused on the adduction zone OR of the sample by means of, for example, a system as described in [8, 9]. The emerging radiation after the interaction with the object in question, consisting of a transmitted component TF and a scattered component SF, is collected by means of a first optical system 41 endowed with optical power and having the front focus F1' centered in the interaction zone OR. Such system is provided with an angular opening greater or preferably much greater than that of the transmitted beam TF, imposed by its own diffraction. Both the transmitted and scattered beams are then substantially collimated by the optical system 41, which separates them spatially in a plane transverse to the optical axis z of the system: the transmitted beam TF remains within a distance from the optical axis z smaller or preferably much smaller compared to the scattered component SF. The radiation collimated by the first optical system 41 is collected by a second optical system 42 having the front focal plane placed at the rear focal plane of the first optical system 41, thus creating a system commonly known as a 4f system, or a variant thereof having focal points of the two optical systems that are not equal to each other. It is known that in the rear focal plane of the second optical system 42 (indicated at PF2', while the rear focus is indicated at F2'), the field present in the front focal plane of the first optical system 41 is reproduced in amplitude and phase. Consequently, by allowing the radiation to propagate for a suitable distance, as occurs for example in the systems [8, 9], it is possible to repeat a similar measurement with a sensor 20.

It is possible to exploit the different transverse spatial distribution of the two radiation components TF and SF which strike the optical system by exploiting the fact that the transmitted component TF is focused in the rear focal plane PF2' of said optical system within a region extending transversely to the region within which the scattered component SF is focused. This happens due to the normal laws of diffractive optics, which also show how the ratio between the extension of the region within which the transmitted beam TF is focused and the one within which the scattered radiation SF is focused is the inverse of the ratio between the extension of the region within which the transmitted radiation TF is confined and the extension within which the scattered component SF propagates in the region wherein the two beams are collimated. On this basis, by operating appropriately in the rear focal plane PF2' of the second optical system 42, it is possible to attenuate only the transmitted beam TF by a factor A, leaving the scattered component SF substantially unchanged. For example, it is possible to insert a diaphragm 10' which obstructs a fraction of the transmitted beam TF in such a way as to transmit a fraction $A^2$ of the power thereof. It should be noted that in this way the component of such beam passing through the diaphragm 10', being spatially limited, undergoes a diffractive phenomenon greater than the beam transmitted undisturbed, which allows the superposition of the transmitted and scattered fields according to the present invention.

Alternatively, it is possible to operate differently on the fields in the section wherein the two radiation components are collimated, i.e., between the two optical systems 41 and 42, where there is the spatial separation necessary to realize the present invention. By operating differently on the two components it is possible to attenuate by a factor A the transmitted beam TF, leaving almost unchanged, or in any case little altered, or altered by a known or measurable quantity, the scattered component SF which propagates around it. Also in this case, the presence of a diaphragm in the rear focal plane of the optical system makes it possible to impose the diffraction necessary for the superposition of the attenuated transmitted beam and the substantially undisturbed scattered beam.

### Examples

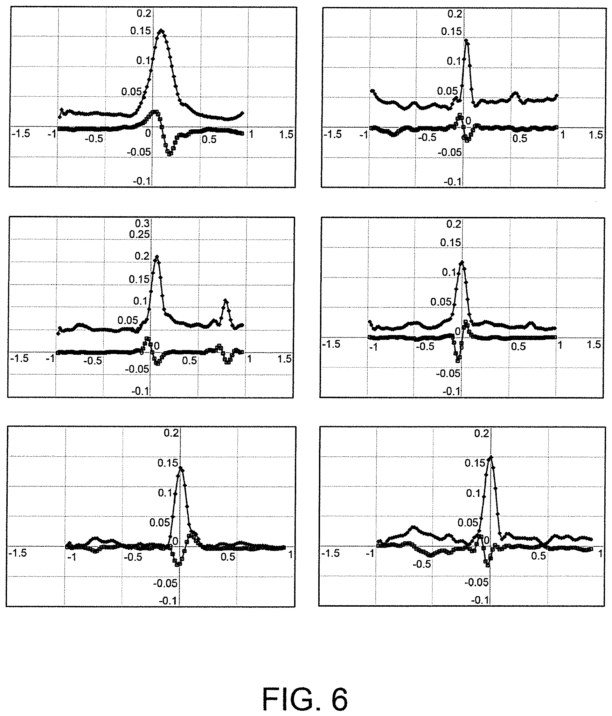

To demonstrate the feasibility of the measurements, and without the following being a limitation on possible embodiments of the present invention, we provide the description of an apparatus made for the purpose similarly to that which is contained in Figure 2b, with which the expected effect has been demonstrated in terms of the increase in the magnitude of the signals that allow the determination of particle properties as in [8, 9]. A laser beam of a wavelength equal to 632.8 nm, originating from a single-mode optical fiber and collimated by an aspherical lens to minimize the aberrations and the wave front distortions, is sent to an achromatic doublet having focal length f = 120 mm. Downstream of the doublet a cylindrical lens with focal length fc = 50 mm is placed in such a way as to form an astigmatic beam with the meridional focus and the sagittal focus separated by about 20 mm. At the meridional focus, a flow cell with parallel flat faces is placed in the vertical plane, which carries a suspension of particles calibrated to transit under known flow conditions and controllable through the region wherein the meridional focus lies. At the sagittal focus, in a vertical plane, is placed a transparent means provided with a thin band arranged vertically capable of attenuating the transmitted beam, leaving the scattered beam substantially unchanged. Tests have been carried out with attenuation values equal to $A^2 = 0.1$ and $A^2 = 0.03$ approximately, values characterized by independent measurements of transmittance of the same laser beam. The beam emerging from the sagittal focus is collected by a quadrant sensor which collects the entire transmitted beam. The sensor consists of four photodiodes, each of which generates a current proportional to the power received, which is amplified by a simple transimpedance circuit. The signals are therefore characterized by a strong continuous component, provided by the undisturbed transmitted beam, and by small fluctuations due to the effect of the transit of the particles and by the superposition of the scattered and transmitted fields. To perform the tests a condition was chosen wherein the transit of individual particles in the beam shows intensity fluctuations on the sensor below the measurability threshold in the absence of an attenuator. By introducing the attenuator, the intensity fluctuations become easily measurable, as shown in Fig.6, wherein examples of signals obtained by the present invention are reported with an attenuation $A^2 = 0.03$ and by analyzing the signals according to the diagrams shown in [8, 9]. The curves shown with squares represent the signal detected in the absence of attenuation, whereas the curves shown with rhombuses represent the signal detected in the presence of attenuation. In particular, the dependencies on time of the total power of the transmitted beam (on the left) and the difference between the power measured on pairs of opposite sensors along the direction of motion of the particles (on the right) are shown. Both parameters and their dependence on time demonstrate quantitatively the proper functioning of the method.

Similarly, the feasibility of the system described with reference to Figure 5 has been proved. The beam of a suitably prepared diode laser with wavelength of 635 nm was focused within the channel of a plane-parallel flow cell as described above, and the light collected by a lens system with focal length $f_1$ = 50 mm placed at the distance $f_1$ from the focus of the beam. Another system of lenses with focal length $f_2$ was placed at the distance $f_1 + f_2$ from the first, so as to form a replica of the field present in the cell in its rear focal plane. A detection device with a quadrant photodiode like the one previously described was placed at a suitable distance from this plane. The system faithfully reproduced the results obtained in the case wherein the detector was placed directly after the interaction zone. In the rear focal plane of the second doublet, a circular diaphragm (pinhole) having a diameter equal to 10 microns was therefore placed, smaller than the extension of the transmitted beam focused in such a way as to attenuate a substantial fraction thereof. The scattered beam passed instead undisturbed. The interference between the two beams has shown the sensitivity increase in accordance with the present invention.

Bibliographical References

[1] Sachweh B et al (1998) Performance evaluation of three optical counters with an efficient "multimodal" calibration method. Aerosol Sci 29: 1075-1086

[2] Heim M et al (2008) Performance evaluation of three optical counters with an efficient "multimodal" calibration method. Aerosol Sci 39: 1019-1031

[3] Ruth, U.: Concentration and size distribution of microparticles in the NGRIP ice core (Central Greenland) during the last glacial period, Ph.D. thesis, University of Bremen, 2002.

[4] Ruth, U., Wagenbach, D., Steffensen, J. P., and Bigler, M.: Continuous record of microparticle concentration and size distribution in the central Greenland NGRIP ice core during the last glacial period, Journal of Geophysical Research: Atmospheres, 108, 2003.

[5] Batchelder JS, Taubenblatt MA (1990) Measurement of size and refractive index of particles using the complex forward-scattered electromagnetic field. US Patent 547735

[6] Batchelder JS, Taubenblatt MA (1991) Measurement of the size and refractive index of a small particle using the complex forward-scattered electromagnetic field. Appl Opt 30: 4972-4979

[7] Bassini A et al (1997) Interferometric system for precise sub-micrometer particle sizing. Appl Opt 31: 8121-8127

[8] Giglio M, Potenza MAC (2005) Process for measuring properties of particles and corresponding apparatus. Patent PCT/IT2005/000362

[9] Potenza MAC, Sanvito T, Pullia A (2015b) Measuring the complex field scattered by single submicron particles. AIPAdv 5: 117222

[10] Terrel E., Gromala J. BEal D., Understanding Liquid Particle Counters, Particle Measuring Systems, Inc. Boulder, CO, 2006

[11] Van de Hulst HC (1957) Light scattering by small particles. Dover, New York

[12] Bohren CF, Huffman DR (1998) Absorption and scattering of light by small particles. Wiley-VCH, Berlin

[13] Borghese F, Denti P, Saija R (2003) Scattering from model nonspherical particles. Springer, Berlin

[14] Mishchenko MI, Hovenier JW, Travis LD (eds) (1999) Light scattering by nonspherical particles: theory, measurements, and applications. Academic, San Diego

[15] Newton RG (1976) Optical theorem and beyond. Am J Phys 44: 639-642

[16] Jackson JD, Classical Electrodynamics, John Wiley e Sons, Inc.

[17] Villa S, Sanvito T, Paroli B, Pullia A, Delmonte B, Potenza MAC (2016) Measuring shape and size of micrometric particles from the analysis of the forward scattered field. J Appl Phys 119: 224901

## Claims

1. Apparatus for the characterization of particle objects by means of a radiation beam (B), which propagates along an optical axis (z), comprising

one or more observation regions (OR) suitable to be illuminated by the radiation beam (B) and suitable to be transited by at least one particle object, said observation region being arranged near or at a focus (F1;F1') of the radiation beam (B), wherein a fraction (SF) of the radiation beam (B) - hereinafter, scattered fraction - is scattered following interaction with the particle object transiting in the observation region (OR), and another fraction (TF) of the radiation beam (B) - hereinafter, transmitted fraction - is transmitted through the respective observation region (OR), without interacting with the particle object transiting in the observation region (OR),
at least one sensor (20) suitable for detecting an interference image determined by the interference between the transmitted fraction (TF) and at least a part of the scattered fraction (SF) that propagates around the direction of the optical axis (z) of the radiation beam (B); and
at least one processing unit (100) configured to determine a characteristic of said particle object from said interference image;

said apparatus being **characterized in that** it comprises optical means (31, 32; 33, 34; 41, 42) acting on at least one of said radiation beam (B), scattered fraction (SF) and transmitted fraction (TF) such that the transmitted fraction (TF) and the scattered fraction (SF) of the radiation beam (B) are distributed in a spatially differentiated manner in a space interposed between the observation region (OR) and the sensor (20), wherein an attenuator (10;10') is provided arranged in a region (F2;PF2') of said space occupied mainly by the transmitted fraction (TF) of the radiation beam, the attenuator (10;10') being configured to attenuate the transmitted fraction (TF) of the radiation beam (B) without substantially altering the scattered fraction of the radiation beam.

2. Apparatus according to claim 1, wherein said optical means are configured to form the radiation beam in an astigmatic manner, thus defining two skewed focal lines (F1, F2), wherein the observation region (OR) is arranged at a first (F1) of said focal lines, and wherein the attenuator (10) is arranged at a second (F2) of said focal lines and is configured as a strip of opaque material extending along the direction of the second focal line (F2).

3. Apparatus according to claim 1, wherein said optical means comprise a first optical system (41) having a front focus (F1') positioned in the observation region (OR) and configured to collimate the transmitted fraction (TF) and the scattered fraction (SF) of the radiation beam (B), and a second optical system (42) having a front focus coinciding with a rear focus of the first optical system (41) and configured to focus the transmitted fraction (TF) and the scattered fraction (SF) of the radiation beam (B) in a rear focus (F2') thereof, located at a distance from the optical sensor (20) such as to allow the formation of said interference image.

4. Apparatus according to claim 3, wherein said attenuator is configured as a diaphragm placed at the rear focus of the second optical system.

5. Apparatus according to claim 3, wherein said attenuator is positioned between the first optical system and the second optical system.

6. Method for characterizing particle objects, comprising the following steps:

generating a radiation beam (B) that propagates along an optical axis (z);
illuminating with said radiation beam an observation region (OR) which is transited by at least one particle object, said observation region being arranged at or near a focus (F1; F1') of the radiation beam (B), wherein a fraction (SF) of the radiation beam (B) - hereinafter, scattered fraction - is scattered following interaction with the particle object transiting in the observation region (OR), and another fraction (TF) of the radiation beam (B) - hereinafter, transmitted fraction - is transmitted through the observation region (OR), without interacting with the particle object transiting in the respective observation region (OR);

collecting, by at least one sensor (20) at the optical axis (z) of the radiation beam (B), an interference image or multiple interference images in time sequence, determined by the interference between the transmitted fraction (TF) and at least a part of the scattered fraction (SF) which propagates around the direction of the optical axis (z); and

determining a characteristic of the particle object starting from said interference image or from said sequence of images;

said method being **characterized in that** at least one of said radiation beam (B), scattered fraction (SF) and transmitted fraction (TF) is formed such that the transmitted fraction (TF) and the scattered fraction (SF) of the radiation beam (B) are distributed in a spatially differentiated manner in a space interposed between the observation region (OR) and the sensor (20), wherein an attenuator (10; 10') is provided arranged in a region of said space occupied mainly by the transmitted fraction (TF) of the radiation beam, the attenuator (10; 10') being configured to attenuate the transmitted fraction (TF) of the radiation beam (B) without substantially altering the scattered fraction (SF) of the radiation beam (B).

7. Method according to claim 6, wherein the radiation beam (B) is formed in an astigmatic manner, thus defining two skew focal lines (F1, F2), wherein the observation region (OR) is arranged at a first (F1) of said focal lines, and wherein the attenuator (10) is arranged at a second (F2) of said focal lines and is configured as a strip of opaque material extending along the direction of the second focal line (F2).

8. Method according to claim 5 or 6, wherein said characteristic comprises at least one of the following: size, composition, shape, aggregation state, interaction between particle objects, interaction between particle object and surrounding medium.

**Patentansprüche**

1. Vorrichtung zur Charakterisierung von Partikelobjekten mittels eines Strahlenbündels (B), das sich entlang einer optischen Achse (z) ausbreitet, aufweisend

   einen oder mehrere Beobachtungsbereiche (OR), die dazu geeignet sind, von dem Strahlenbündel (B) beleuchtet zu werden, und die dazu geeignet sind, von mindestens einem Partikelobjekt durchdrungen zu werden, wobei der Beobachtungsbereich in der Nähe von oder in einem Fokus (F1; F1') des Strahlenbündels (B) angeordnet ist, wobei ein Bruchteil (SF) des Strahlenbündels (B) - nachfolgend gestreuter Bruchteil - nach Interaktion mit dem den Beobachtungsbereich (OR) durchdringenden Partikelobjekt gestreut wird, und ein anderer Bruchteil (TF) des Strahlenbündels (B) - nachfolgend durchgeleiteter Bruchteil - durch den entsprechenden Beobachtungsbereich (OR) durchgeleitet wird, ohne mit dem den Beobachtungsbereich (OR) durchdringenden Partikelobjekt zu interagieren,
   mindestens einen Sensor (20), der dazu geeignet ist, ein Interferenzbild zu erfassen, das durch die Interferenz zwischen dem durchgeleiteten Bruchteil (TF) und mindestens einem Teil des gestreuten Bruchteils (SF) bestimmt ist, welcher sich um die Richtung der optischen Achse (z) des Strahlenbündels (B) ausbreitet, und
   mindestens eine Verarbeitungseinheit (100), die dazu ausgelegt ist, ein Charakteristikum des Partikelobjekts aus dem Interferenzbild zu bestimmen;
   wobei die Vorrichtung **dadurch gekennzeichnet ist, dass** sie optische Vorrichtungen (31, 32; 33, 34; 41, 42) aufweist, welche derart auf das Strahlenbündel (B) und/oder den gestreuten Bruchteil (SF) und/oder den durchgeleiteten Bruchteil (TF) einwirken, dass der durchgeleitete Bruchteil (TF) und der gestreute Bruchteil (SF) des Strahlenbündels (B) räumlich differenziert in einem Raum verteilt sind, der zwischen den Beobachtungsbereich (OR) und den Sensor (20) gelegt ist, wobei eine Abschwächungseinrichtung (10, 10') in einem Bereich (F2; PF2') des Raums angeordnet ist, der hauptsächlich von dem durchgeleiteten Bruchteil (TF) des Strahlenbündels eingenommen ist, wobei die Abschwächungseinrichtung (10,10') dazu ausgelegt ist, den durchgeleiteten Bruchteil (TF) des Strahlenbündels (B) abzuschwächen, ohne den gestreuten Bruchteil des Strahlenbündels wesentlich zu ändern.

2. Vorrichtung nach Anspruch 1, wobei die optischen Vorrichtungen dazu ausgelegt sind, das Strahlenbündel astigmatisch zu formen, wodurch zwei schräge Fokuslinien (F1, F2) definiert werden, wobei der Beobachtungsbereich (OR) auf einer ersten (F1) der Fokuslinien angeordnet ist und wobei die Abschwächungseinrichtung (10) auf einer zweiten (F2) der Fokuslinien angeordnet ist und als ein Streifen aus opakem Material, der sich entlang der Richtung der zweiten Fokuslinie (F2) erstreckt, ausgelegt ist.

3. Vorrichtung nach Anspruch 1, wobei die optischen Vorrichtungen ein erstes optisches System (41) mit einem Frontfokus (F1'), welcher im Beobachtungsbereich (OR) angeordnet und dazu ausgelegt ist, den durchgeleiteten Bruchteil (TF) und den gestreuten Bruchteil (SF) des Strahlenbündels (B) zu kollimieren, und ein zweites optisches System (42) mit einem Frontfokus aufweist, der mit einem hinteren Fokus des ersten optischen Systems (41) zusammenfällt und dazu ausgelegt ist, den durchgeleiteten Bruchteil (TF) und den gestreuten Bruchteil (SF) des Strahlenbündels (B) in einem hinteren Fokus (F2') davon zu fokussieren, welcher derart von dem optischen Sensor (20) beabstandet angeordnet ist, dass die Bildung des Interferenzbildes möglich ist.

4. Vorrichtung nach Anspruch 3, wobei die Abschwächungseinrichtung als Diaphragma ausgelegt ist, welches an dem hinteren Fokus des zweiten optischen Systems platziert ist.

5. Vorrichtung nach Anspruch 3, wobei die Abschwächungseinrichtung zwischen dem ersten optischen System und dem zweiten optischen System angeordnet ist.

6. Verfahren zur Charakterisierung von Partikelobjekten, aufweisend die folgenden Schritte:

   Erzeugen eines Strahlenbündels (B), das sich entlang einer optischen Achse (z) ausbreitet;
   Beleuchten, mittels des Strahlenbündels, eines Beobachtungsbereichs (OR), der von mindestens einem Partikelobjekt durchdrungen wird, wobei der Beobachtungsbereich an oder in der Nähe von einem Fokus (F1; F1') des Strahlenbündels (B) angeordnet ist, wobei ein Bruchteil (SF) des Strahlenbündels (B) - nachfolgend gestreuter Bruchteil - nach Interaktion mit dem den Beobachtungsbereich (OR) durchdringenden Partikelobjekt gestreut wird und ein anderer Bruchteil (TF) des Strahlenbündels (B) - nachfolgend durchgeleiteter Bruchteil - durch den entsprechenden Beobachtungsbereich (OR) durchgeleitet wird, ohne mit dem den entsprechenden Beobachtungsbereich (OR) durchdringenden Partikelobjekt zu interagieren;
   Aufnehmen, mittels mindestens einem Sensor (20) auf der optischen Achse (z) des Strahlenbündels (B), eines Interferenzbildes oder mehrerer Interferenzbilder in zeitlicher Abfolge, welche durch die Interferenz zwischen dem durchgeleiteten Bruchteil (TF) und mindestens einem Bruchteil des gestreuten Anteils (SF), der sich entlang der Richtung der optischen Achse (z) ausbreitet, bestimmt ist; und

Bestimmen eines Charakteristikums des Partikelobjekts, ausgehend von dem Interferenzbild oder der Abfolge von Bildern;

wobei das Verfahren **dadurch gekennzeichnet ist, dass** das Strahlenbündel (B) und/oder der gestreute Bruchteil (SF) und/oder der durchgeleitete Bruchteil (TF) derart geformt ist/sind, dass der durchgeleitete Bruchteil (TF) und der gestreute Bruchteil (SF) des Strahlenbündels (B) räumlich differenziert in einem Raum verteilt sind, der zwischen den Beobachtungsbereich (OR) und den Sensor (20) gelegt ist, wobei eine Abschwächungseinrichtung (10, 10') in einem Bereich des Raums angeordnet ist, der hauptsächlich von dem durchgeleiteten Bruchteil (TF) des Strahlenbündels eingenommen ist, wobei die Abschwächungseinrichtung (10,10') dazu ausgelegt ist, den durchgeleiteten Bruchteil (TF) des Strahlenbündels (B) abzuschwächen, ohne den gestreuten Bruchteil (SF) des Strahlenbündels wesentlich zu ändern.

7. Verfahren nach Anspruch 6, wobei das Strahlenbündel (B) auf astigmatische Weise geformt ist, wodurch zwei schräge Fokuslinien (F1, F2) definiert werden, wobei der Beobachtungsbereich (OR) auf einer ersten (F1) der Fokuslinien angeordnet ist und wobei die Abschwächungseinrichtung (10) auf einer zweiten (F2) der Fokuslinien angeordnet ist und als ein Streifen aus opakem Material, der sich entlang der Richtung der zweiten Fokuslinie (F2) erstreckt, ausgelegt ist.

8. Verfahren nach Anspruch 5 oder 6, wobei das Charakteristikum mindestens eines der Folgenden umfasst: Größe, Zusammensetzung, Form, Aggregatszustand, Interaktion zwischen Partikelobjekten, Interaktion zwischen Partikelobjekt und umgebendem Medium.

## Revendications

1. Appareil pour la caractérisation d'objets particuliers au moyen d'un faisceau de rayonnement (B), qui se propage le long d'un axe optique (z), comprenant

une ou plusieurs régions d'observation (OR) aptes à être illuminées par le faisceau de rayonnement (B) et aptes à être traversées par au moins un objet particulaire, ladite région d'observation étant agencée à proximité ou au niveau d'un foyer (F1 ; F1') du faisceau de rayonnement (B), dans lequel une fraction (SF) du faisceau de rayonnement (B), à laquelle il est fait ci-après référence en tant que fraction diffusée, est diffusée à la suite d'une interaction avec l'objet particulaire traversant la région d'observation (OR), et une autre fraction (TF) du faisceau de rayonnement (B), à laquelle il est fait ci-après référence en tant que fraction transmise, est transmise à travers la région d'observation (OR) respective, sans interaction avec l'objet particulaire traversant la région d'observation (OR),

au moins un capteur (20) apte à détecter une image d'interférence déterminée par l'interférence entre la fraction transmise (TF) et au moins une partie de la fraction diffusée (SF) qui se propage autour de la direction de l'axe optique (z) du faisceau de rayonnement (B) ; et

au moins une unité de traitement (100) configurée pour déterminer une caractéristique dudit objet particulaire à partir de ladite image d'interférence ;

ledit appareil étant **caractérisé en ce qu'**il comprend des moyens optiques (31, 32 ; 33, 34 ; 41, 42) agissant sur au moins l'un parmi ledit faisceau de rayonnement (B), ladite fraction diffusée (SF) et ladite fraction transmise (TF) de sorte que la fraction transmise (TF) et la fraction diffusée (SF) du faisceau de rayonnement (B) soient distribuées d'une manière spatialement différenciée dans un espace interposé entre la région d'observation (OR) et le capteur (20), dans lequel il est prévu un atténuateur (10 ; 10') agencé dans une région (F2 ; PF2') dudit espace occupée principalement par la fraction transmise (TF) du faisceau de rayonnement, l'atténuateur (10 ; 10') étant configuré pour atténuer la fraction transmise (TF) du faisceau de rayonnement (B) sans altérer sensiblement la fraction diffusée du faisceau de rayonnement.

2. Appareil selon la revendication 1, dans lequel lesdits moyens optiques sont configurés pour former le faisceau de rayonnement d'une manière astigmatique, en définissant ainsi deux lignes focales obliques (F1, F2), dans lequel la région d'observation (OR) est agencée au niveau d'une première (F1) parmi lesdites lignes focales, et dans lequel l'atténuateur (10) est agencé au niveau d'une deuxième (F2) parmi lesdites lignes focales et est configuré en tant qu'une bande de matériau opaque s'étendant dans la direction de la deuxième ligne focale (F2).

3. Appareil selon la revendication 1, dans lequel lesdits moyens optiques comprennent un premier système optique (41) présentant un foyer avant (F1') positionné dans la région d'observation (OR) et configuré pour collimater la fraction transmise (TF) et la fraction diffusée (SF) du faisceau de rayonnement (B), et un deuxième système optique (42) présentant un foyer avant coïncidant avec un foyer arrière du premier système optique (41) et configuré pour focaliser la fraction transmise (TF) et la fraction diffusée (SF) du faisceau de rayonnement (B) dans un foyer arrière (F2') de celui-ci, situé à une distance du capteur optique (20) de manière à permettre la formation de ladite image d'interférence.

4. Appareil selon la revendication 3, dans lequel ledit atténuateur est configuré en tant qu'un diaphragme placé au niveau du foyer arrière du deuxième système optique.

5. Appareil selon la revendication 3, dans lequel ledit atténuateur est positionné entre le premier système optique et le deuxième système optique.

6. Procédé pour la caractérisation d'objets particulaires, comprenant les étapes suivantes :

    la génération d'un faisceau de rayonnement (B) qui se propage le long d'un axe optique (z) ;
    l'illumination, avec ledit faisceau de rayonnement, d'une région d'observation (OR) qui est traversée par au moins un objet particulaire, ladite région d'observation étant agencée à proximité ou au niveau d'un foyer (F1 ; F1') du faisceau de rayonnement (B), dans lequel une fraction (SF) du faisceau de rayonnement (B), à laquelle il est fait ci-après référence en tant que fraction diffusée, est diffusée à la suite d'une interaction avec l'objet particulaire traversant la région d'observation (OR), et une autre fraction (TF) du faisceau de rayonnement (B), à laquelle il est fait ci-après référence en tant que fraction transmise, est transmise à travers la région d'observation (OR), sans interaction avec l'objet particulaire traversant la région d'observation (OR) respective ;
    la collecte, par au moins un capteur (20) au niveau de l'axe optique (z) du faisceau de rayonnement (B), d'une image d'interférence ou de multiples images d'interférence dans une séquence chronologique, déterminées par l'interférence entre la fraction transmise (TF) et au moins une partie de la fraction diffusée (SF) qui se propage autour de la direction de l'axe optique (z) ; et
    la détermination d'une caractéristique de l'objet particulaire à partir de ladite image d'interférence ou de ladite séquence d'images ;
    ledit procédé étant **caractérisé en ce qu'**au moins l'un parmi ledit faisceau de rayonnement (B), ladite fraction diffusée (SF) et ladite fraction transmise (TF) est formé de sorte que la fraction transmise (TF) et la fraction diffusée (SF) du faisceau de rayonnement (B) soient distribuées d'une manière spatialement différenciée dans un espace interposé entre la région d'observation (OR) et le capteur (20), dans lequel il est prévu un atténuateur (10 ; 10') agencé dans une région dudit espace occupée principalement par la fraction transmise (TF) du faisceau de rayonnement, l'atténuateur (10 ; 10') étant configuré pour atténuer la fraction transmise (TF) du faisceau de rayonnement (B) sans altérer sensiblement la fraction diffusée (SF) du faisceau de rayonnement (B).

7. Procédé selon la revendication 6, dans lequel le faisceau de rayonnement (B) est formé d'une manière astigmatique, en définissant ainsi deux lignes focales obliques (F1, F2), dans lequel la région d'observation (OR) est agencée au niveau d'une première (F1) parmi lesdites lignes focales, et dans lequel l'atténuateur (10) est agencé au niveau d'une deuxième (F2) parmi lesdites lignes focales et est configuré en tant qu'une bande de matériau opaque s'étendant dans la direction de la deuxième ligne focale (F2).

8. Procédé selon la revendication 5 ou 6, dans lequel ladite caractéristique comprend au moins l'un parmi ce qui suit : taille, composition, forme, état d'agrégation, interaction entre des objets particulaires, interaction entre un objet particulaire et un milieu environnant.

FIG. 1

FIG. 2b

FIG. 2a

FIG. 3a

FIG. 3b

FIG. 4a

FIG. 4b

FIG. 5

14

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1899705 A1
- US 6597446 B2
- US 6049382 A
- US 547735 A, Batchelder JS, Taubenblatt MA
- IT 2005000362 W, Giglio M, Potenza MAC

### Non-patent literature cited in the description

- **SACHWEH B et al.** Performance evaluation of three optical counters with an efficient ''multimodal'' calibration method. *Aerosol Sci,* 1998, vol. 29, 1075-1086
- **HEIM M et al.** Performance evaluation of three optical counters with an efficient ''multimodal'' calibration method. *Aerosol Sci,* 2008, vol. 39, 1019-1031
- Concentration and size distribution of microparticles in the NGRIP ice core (Central Greenland) during the last glacial period. **RUTH, U.** Ph.D. thesis. University of Bremen, 2002
- **RUTH, U. ; WAGENBACH, D ; STEFFENSEN, J. P ; BIGLER, M.** Continuous record of microparticle concentration and size distribution in the central Greenland NGRIP ice core during the last glacial period. *Journal of Geophysical Research: Atmospheres,* 2003, vol. 108
- **BATCHELDER JS ; TAUBENBLATT MA.** Measurement of the size and refractive index of a small particle using the complex forward-scattered electromagnetic field. *Appl Opt,* 1991, vol. 30, 4972-4979
- **BASSINI A et al.** Interferometric system for precise sub-micrometer particle sizing. *Appl Opt,* 1997, vol. 31, 8121-8127
- **POTENZA MAC ; SANVITO T ; PULLIA A.** Measuring the complex field scattered by single submicron particles. *AIPAdv,* 2015, vol. 5, 117222
- Understanding Liquid Particle Counters. **TERREL E. ; GROMALA J. ; BEAL D.** Particle Measuring Systems. Inc. Boulder, 2006
- **VAN DE HULST HC.** Light scattering by small particles. Dover, 1957
- **BOHREN CF ; HUFFMAN DR.** Absorption and scattering of light by small particles. Wiley-VCH, 1998
- **BORGHESE F ; DENTI P ; SAIJA R.** Scattering from model nonspherical particles. Springer, 2003
- Light scattering by nonspherical particles: theory, measurements, and applications. Academic, 1999
- **NEWTON RG.** Optical theorem and beyond. *Am J Phys,* 1976, vol. 44, 639-642
- **JACKSON JD.** Classical Electrodynamics. John Wiley e Sons, Inc,
- **VILLA S ; SANVITO T ; PAROLI B ; PULLIA A ; DELMONTE B ; POTENZA MAC.** Measuring shape and size of micrometric particles from the analysis of the forward scattered field. *J Appl Phys,* 2016, vol. 119, 224901